# EUROPEAN PATENT SPECIFICATION

(11) **EP 1 294 522 B1**
(45) Date of publication and mention of the grant of the patent: **19.09.2007**
(21) Application number: 01908547.1
(22) Date of filing: 21.02.2001
(51) Int. Cl.: B23K 9/12, B23K 37/02

(54) **WELDING TORCH AND ARRANGEMENT FOR MIG/MAG WELDING**
SCHWEISSBRENNER UND AGGREGAT ZUM MIG/MAG SCHWEISSEN
CHALUMEAU SOUDEUR ET DISPOSITIF DE SOUDAGE MIG/MAG

(30) Priority: 22.02.2000 SE 0000553
(43) Date of publication of application: 26.03.2003
(73) Proprietor: Esab AB, 402 77 Göteborg (SE)
(72) Inventor: HENRIKSEN, Jan-Erik, S-695 32 Laxa (SE); KAUFMANN, Herbert, S-702 29 Örebro (SE)
(86) International application number: PCT/SE2001/000390
(87) International publication number: WO 2001/062424

(56) References cited:
- EP-A1- 0 193 864
- WO-A1-97/45227
- US-A- 4 088 866

## Description

### Technical field

The present invention relates to a welding torch for MIG/MAG welding with a number of welding electrodes according to the preamble of claim 1, and to an installation with said welding torch in combination with a manipulator according to the preamble of claim 12.

### Background

In gas metal arc-welding, hereinafter referred to as MIG/MAG welding, the equipment consists of a welding torch, a welding power source, a wire feeding mechanism, a wire bobbin for welding electrode, welding cabling and protective gas equipment. In the case of mechanized or automated welding, a manipulator for bringing about relative movement between the object being welded and the welding torch is also included. Sometimes both a manipulator for moving the welding torch and a manipulator for moving the object being welded are included.

It has been found especially favourable for productivity to weld using two or more welding electrodes fed simultaneously to the same molten pool. Welding torches for this purpose have been produced, in which the welding electrodes are supplied to the pool in a common laminar protective gas flow.

A very effective form of such multi-wire welding in terms of welding speed involves welding using two electrodes, under common gas protection, which are advanced in the main one after the other in the longitudinal direction of the joint, where each welding electrode is fed from its own wire feeding mechanism and is provided with fusion power from its own welding power source working independently of the other power source. This form is usually referred to as Tandem MIG/MAG welding. By rotating the two electrode positions in relation to the center line of the joint in the longitudinal direction, improved tolerance towards gap variations in the joint can also be achieved. Maximum welding speed is obtained, however, when the electrodes are located one directly behind the other in the longitudinal direction of the joint.

In such multi-wire welding, the welding electrodes can have different dimensions. It is likewise possible for one welding power source to deliver direct current, while the other delivers alternating current, or for one to deliver direct current with the welding wire positive in relation to the object being welded, while the other delivers direct current of opposite polarity.

Welding parameters such as welding voltage and wire feed speed are set so that the welding power supplied for fusion of the respective welding electrode corresponds to the wire feed speed. The advance speed of the torch along the weld joint is adapted to that for suitable filling up of the joint for the set wire feed speed is achieved.

DD 153 596 describes a welding torch for such Tandem MIG/MAG welding. This torch is provided with two contact tubes usually elastically attached at the rear end of the torch and with a setting device at the front end of the torch for setting the spacing between the front openings of the contact tubes. The setting device consists of an eccentric disk which can be operated from the outside and forces the contact tubes into radially mutually different positions depending on the rotary position of the disk. This welding torch therefore affords the possibility of setting the positions of the welding electrodes in relation to one another. One disadvantage is that the electrodes are adjustable in relation to one another in only the lateral direction. A further disadvantage is that the adjustment range is limited owing to the fact that the elasticity of the contact tubes themselves or of their attachment at the rear end of the torch determines the size of the adjustment range. The dependence on elastic elements is also a disadvantage because the elasticity changes with time, for example as a result of the high temperature present in a welding torch. Problems of tightness, for the protective gas flowing through the torch, at the attachment of the contact tubes also arise as a consequence of the interaction of the contact tubes with these elastic attachment elements. A further disadvantage is the lack of setting accuracy over a greater setting range which results from the solution using an eccentric disk as a setting device. Moreover, adjustment is effected in the front part of the torch, where the heat is greatest, which makes adjustment during operation virtually impossible.

WO 97/45227 describes on page 17 as of line 20 and also in the two claims 16 and 17 a welding torch with a spacing between two contact tubes which can be set in the lateral direction. The purpose is, on the one hand, to prevent the electrodes coming so close to one another that either arc flashes over to the other electrode and, on the other hand, to prevent the arcs burning apart for so long that two separate molten pools arise with the accompanying welding spatter. There is no indication of setting means here either, or even the need for such, for interrelationships between the welding wires other than the spacing in the lateral direction.

### The object of the invention

The object of the invention is to improve the prerequisites for creating optimum welding conditions as far as the MIG/MAG process is concerned in welding using a number of welding electrodes in a common pool. It was mentioned above that welding voltage and wire feed speed are parameters which control the welding process. Another parameter which influences the welding result to a great extent is the inclination of the welding torch in relation to the weld joint. Another important parameter for the process is the length of the free electrode end, that is to say the length of the electrode projection from the outlet of the contact nozzle to the arc. In this part of the welding electrode, resistive preheating of the electrode takes place by means of the current passing through. This in turn influences how much of the energy of the arc is needed to fuse the electrode end. The electrode projection is therefore of vital importance for the welding result. In single-wire welding, it is the height of the torch above the object being welded which determines the electrode projection. Different electrode materials require different lengths of electrode projection.

In multi-wire welding, the situation is more complicated. It has been found to be favorable sometimes to use different materials in the different welding wires which materials, for example, can have different compositions in terms of alloying materials. It has also proved to be especially effective for the welding speed to weld using one solid electrode and one electrode of the cored wire type. Achieving optimum welding conditions is not then possible merely by individual setting of welding voltage and wire feed speed. Further problems occur when a multi-wire torch is angled in relation to the object being welded, in particular in a plane oriented along the joint and essentially at right angles to the surface of the workpiece. Welding spatter then occurs, and the process becomes unstable. The invention solves the problems in ways indicated in the characterizing parts of the independent claims. By virtue of the fact that means for adjusting the electrode projection(s) is/are integrated in the torch, it is possible to make optimum settings for each electrode type. By virtue of the accessibility of the adjusting means when the torch is equipped and connected for welding, it is possible not only to preset suitable projection relationships but also dynamically to change these during ongoing welding, for example as a consequence of a change in torch angle in relation to the workpiece, because adjustment can be carried out without any form of demounting of the torch or its accessories.

Further disadvantages inherent in the known art, as described previously, are overcome by the subordinate claims, in which advantageous embodiments of the invention are also described.

### Brief description of the drawing

Fig. la shows a welding torch in an embodiment according to the invention with means for projection adjustment and spacing adjustment, and with two supply lines for welding current connected, a gas cover connected and two contact nozzles connected.

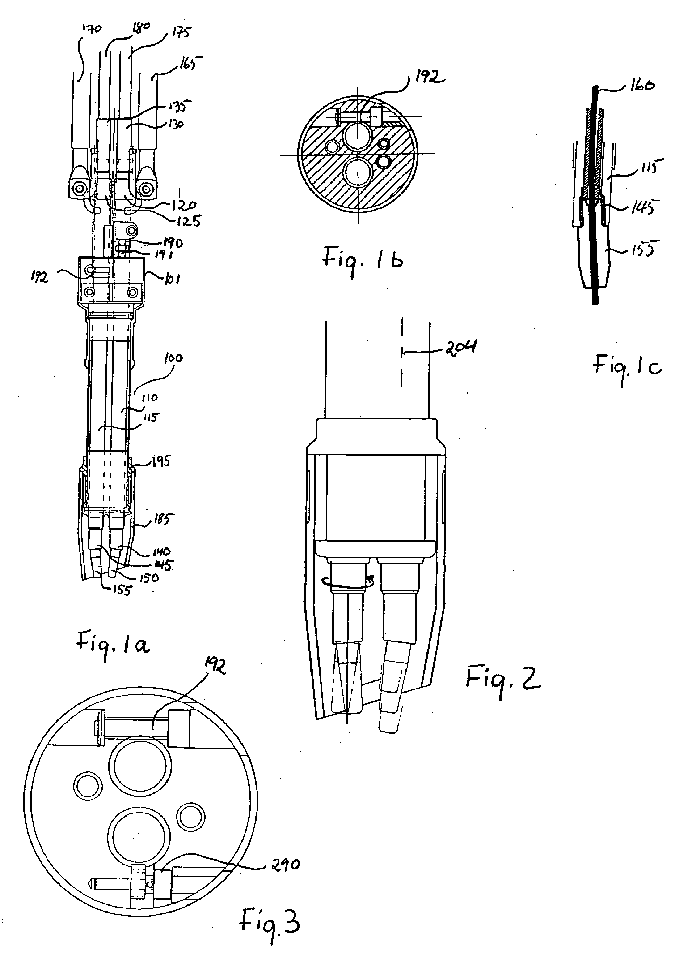

Fig. 1b shows in a cross section of Fig. 1a an embodiment of spacing-adjusting means.
Fig. 1c shows an example of the passage of a welding electrode through a contact tube and a contact nozzle.
Fig. 2 shows three different possible positions for a contact nozzle with projection-adjusting means (not shown) in the form of longitudinal position-shifting means of the contact tube and also three different possible positions for a contact nozzle with spacing-adjusting means (not shown) in the form of rotators for the contact tube.
Fig. 3 shows an embodiment with a worm gear as the spacing-adjusting means and a pinion with a rack integrated in the contact tube as the projection-adjusting means.
Fig. 4 shows a welding torch with a revolving device mounted for adjustment of the positions of the arcs relative to the center line of the joint.
Fig. 5 shows a welding torch with two motors integrated for adjusting projection and, respectively, spacing.
Fig. 6 shows a torch according to Fig. 5 with a further motor for revolving adjustment.

### Description of preferred embodiments

Examples of embodiments of the invention will now be described.

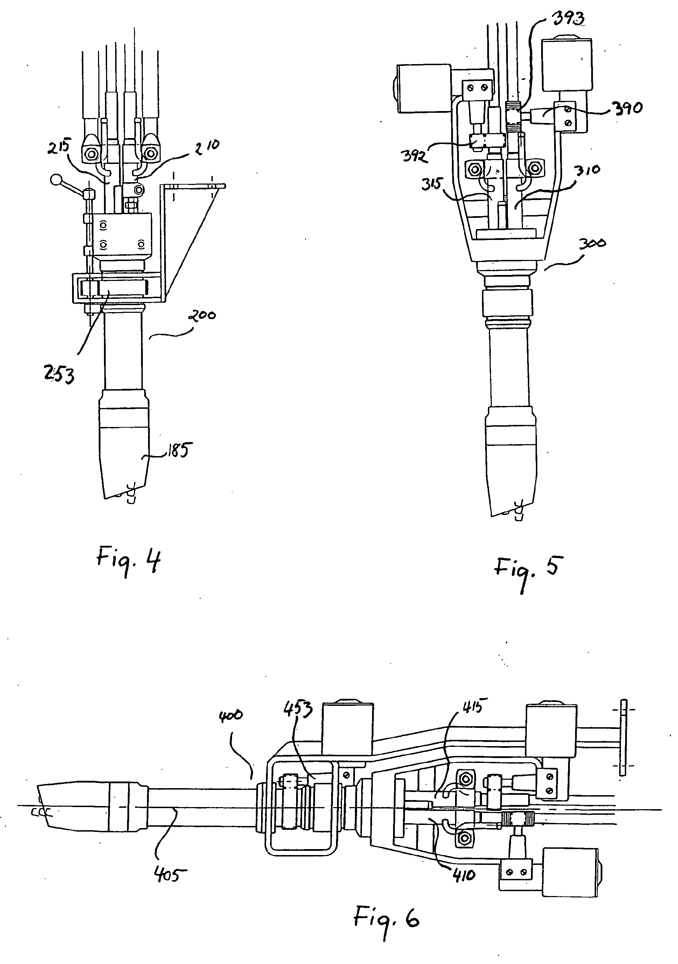

The welding torch 100 comprises two contact tubes 110, 115 which run essentially parallel through the welding torch body 101. At the front opening of the contact tubes, these are each provided with a connection 140, 145 in the form of an internal thread, or alternatively some form of bayonet mounting or friction coupling, for a contact nozzle 150, 155. At least one of these can be designed so that the contact nozzle forms an angle of the order of 3-15° in relation to the longitudinal symmetry axis of the contact tube. The contact tubes are electrically insulated from one another and are provided with connection devices 120, 125 for electrical connection to supply lines 165, 170, which can be connected to the torch, for welding current normally from two different welding power sources. Arranged between the first contact tube 110 and the welding torch body 101 is a device 190 for longitudinal displacement of the contact tube within the welding torch body. Alternatively, this device can be mounted on the second contact tube 115 instead of on the welding torch body. In this example, the device is designed as a threaded rod 191 with a wrench grip in the center. The direction and/or pitch of the thread is/are different at the two ends, as a result of which rotation of the rod brings about movement of the contact tube in the axial direction. The design at one end can also be in the form of a flange which runs in a groove in the connecting part, or another corresponding solution which brings about a rotatable but axially fixed connection to one connecting part. This can be regarded as a thread without pitch and with a very short extent. Instead of a wrench grip, a transmission element such as a worm wheel, a gear wheel, a rim gear or a pulley can be arranged on the rod, which then makes it possible to connect a motor so as thus to be capable of automating the adjustment procedure. It is advantageous to position the adjusting device described in the rear part of the torch, where the heat is lower during welding. It is important that the adjusting device is accessible for adjustment without the torch or its accessories having to be dismantled. It is thus possible not only to preset different relative positions between the contact tubes and thus different electrode projection lengths but also to adjust these during operation and thus compensate for changed relationships between the welding torch and the object being welded in terms of angle and/or height. Another embodiment also includes an electric motor in the welding torch as shown in Figs 5 and 6. It can then be advantageous to use a linear transmission element such as a rack 393 for longitudinal displacement of the contact tube 310, 410.

Spacing adjustment of the arcs during welding can be brought about by means of a simple angle gear arrangement in which the worm screw consists of an ordinary screw 192. This presupposes that, for this second contact tube 115, connection of the contact nozzle 155 has been carried out so that an angle has been formed between the contact nozzle and the contact tube, as described previously. By rotating the contact tube, the contact nozzle will be made to take up different positions in the lateral direction in relation to the other contact nozzle, as can be seen in Fig. 2. This affords simple adjustment of the spacing between the points of entry of the arcs into the molten pool, without the disadvantages described in the previously known art. There is no need for elastic attachment elements, the risk of leakage of welding gas in the rear part of the torch is reduced etc.

By also connecting a rotating device 253 for the whole torch according to Fig. 4, adjustment of the width of the molten pool can be achieved, which can be an advantage if varying gap widths occur in the joint.

By incorporating an electric motor into one or more of the adjusting devices, the advantage is afforded that it is possible to remote-control the adjustment. This means that adjustments can be effected at a greater distance from the light-emitting and heat-radiating parts during welding. Furthermore, automation of the adjustment operations becomes possible with a control system and a control device for each adjusting device. The adjusting devices should then also comprise speed and/or position sensors of, for example, the absolute type or incremental optical sensors, resolver sensors, tachometers etc. It is then advantageous if a control system which manages the relative movement of the welding torch in relation to the object being welded also manages the control of one or more adjusting devices present in the welding torch. This can be effected by the positions of these adjusting devices being stored for the same points as are stored for the abovementioned relative movement. A programmed movement both for movements within the welding torch and for its movement along the object being welded is then possible, and these movements can also be synchronized, so that, for example, a smooth transition between different stored positions of the adjusting devices in the torch is obtained. It is then possible, in particular, to adapt the speed so that the starting and stopping of movements in the adjusting devices is simultaneous with associated starting and stopping of movements relating to the movement of the torch along the joint.

In addition to the illustrative embodiments above, embodiments of different types are also possible within the scope of the claims.

## Claims

1. A welding torch (100; 200; 300; 400) for MIG/MAG welding with a number of welding electrodes in the same molten pool, comprising a first (110; 210; 310; 410) and a second (115; 215; 315; 415) contact tube, which tubes are electrically insulated from one another, where each contact tube comprises a first connection device (120, 125) for electrical connection to a connectable supply line (165, 170) for welding current and also a second connection device (130, 135) for connection to a connectable wire guide (175, 180) for feeding welding electrode (160) from a wire feeding mechanism, and where each contact tube also comprises means (140, 145) for connection of a contact nozzle, in which contact nozzle (150, 155), during welding, the main transfer of welding current to the welding electrode (160) which can be fed through the welding torch takes place, and where said welding torch also comprises means (195) for connection of a gas cover (185), the purpose of which is to supply protective gas around arcs and molten pool during welding, and where the welding torch is **characterized in that** it also comprises means (190; 290; 390) for adjusting the relationship between lengths of projection from two or more contact nozzles of the electrodes which can be fed through the welding torch, where said means for projection adjustment is/are accessible for adjustment when the torch is equipped and connected for welding.

2. The welding torch as claimed in claim 1, **characterized in that** it also comprises means (192; 392) for adjusting the spacing between the points at which two different arcs meet the molten pool, where these arcs, during welding, each burn between their own welding electrode end and a common molten pool on the object being welded, and where said spacing-adjusting means is/are accessible for adjustment when the torch is equipped and connected for welding.

3. The welding torch as claimed in claim 1 or 2, **characterized in that** the means for projection adjustment and/or the means for spacing adjustment comprise(s) a gear mechanism in order to improve setting accuracy.

4. The welding torch as claimed in any one of the preceding claims, **characterized in that** the means for projection adjustment and/or the means for spacing adjustment comprise(s) an electric motor for carrying out the adjustment or a device for connection of such a motor.

5. The welding torch as claimed in any one of the preceding claims, **characterized in that** the means for projection adjustment influence(s) the mutual position of the first and the second contact tube essentially along the longitudinal symmetry axis (405) of the welding torch.

6. The welding torch as claimed in any one of the preceding claims, **characterized in that** the means for projection adjustment comprise(s) a threaded element (191) arranged between, on the one hand, the welding torch body (101) or the second contact tube and, on the other hand, the first contact tube, so that rotation of said element causes relative movement between the parts connected by means of the threaded element.

7. The welding torch as claimed in claim 6, **characterized in that**, for said threaded element, the pitch and/or direction of the thread differs as far as, on the one hand, the connection to the welding torch body/second contact tube and, on the other hand, the connection to the first contact tube are concerned.

8. The welding torch as claimed in either claim 6 or 7, **characterized in that** the threaded element comprises a wrench grip or a transmission element such as a worm wheel, a gear wheel, a rim gear or a pulley for rotation of said threaded element.

9. Welding torch as claimed in any one of claims 1 to 5 inclusive, **characterized in that** the means for projection adjustment comprise(s) a linear transmission element (393) such as a rack and a pinion acting on the first contact tube so that relative movement between the latter and the second contact tube is achieved.

10. The welding torch as claimed in any one of the preceding claims, **characterized in that** the connection between one contact tube and the associated contact nozzle is designed in such a manner that this contact nozzle, when it has been connected, forms an angle in relation to the longitudinal symmetry axis (204) of the associated contact tube, and **in that** the means for adjusting the spacing between the points at which two different arcs meet the molten pool is/are designed in order to rotate this contact tube around its longitudinal symmetry axis.

11. The welding torch as claimed in any one of the preceding claims, **characterized in that** it also comprises a revolving device (253; 453) for revolving the whole welding torch around its longitudinal symmetry axis (405) for adjusting the positions of the arcs relative to the center line of the joint on the object being welded, where this revolving device is accessible for rotation when the torch is equipped and connected for welding.

12. Installation comprising a manipulator, such as an industrial robot, adapted to bear a welding torch for movement along an object being welded or adapted to bear an object being welded for movement along a welding torch, where the manipulator comprises a control system for controlling programmed relative movement between the welding torch and the joints of the object being welded, **characterized in that** the welding torch is in both cases designed according to any of the preceding claims, and **in that** the control system also comprises a first control device adapted for adjusting the relationships between the length of the electrode projections from different contact nozzles during welding and/or a second control device adapted for adjusting the spacing between the points at which different arcs meet the molten pool during welding.

13. Installation as claimed in claim 12, **characterized in that** the control system comprises means for storing the mutual positions of the contact tubes at each programmed movement point of the welding torch and/or the object being welded.

14. Installation as claimed in claim 13, **characterized in that** the control system comprises means for controlling the first and/or the second control device so that a smooth transition between the different stored positions according to claim 13 is achieved.

## Patentansprüche

1. Schweißbrenner (100; 200; 300; 400) zum MIG/MAG-Schweißen mit mehreren Schweißelektroden im selben Schweißbad, umfassend eine erste (110; 210; 310; 410) und eine zweite (115; 215; 315; 415) Schweißdrahtführung, wobei diese Schweißdrahtführungen elektrisch voneinander isoliert sind, wobei jede Schweißdrahtführung eine erste Verbindungsvorrichtung (120, 125) zur elektrischen Verbindung mit einer anschließbaren Versorgungsleitung (165, 170) für Schweißstrom aufweist, und auch eine zweite Verbindungseinrichtung (130, 135) zur Verbindung mit einer anschließbaren Drahtführung (175, 180), um die Schweißelektrode (160) von einem Drahtzuführmechanismus zuzuführen, und wobei jede Schweißdrahtführung auch Mittel (140, 145) zur Verbindung einer Kontaktdüse aufweist, wobei der Haupttransfer des Schweißstroms auf die Schweißelektrode (160), der während des Schweißens vom Schweißbrenner zugeführt werden kann, in dieser Kontaktdüse (150, 155) stattfindet, und wobei der Schweißbrenner auch Mittel (195) zur Verbindung einer Gasabdeckung (185) aufweist, um während des Schweißens ein Schutzgas um die Lichtbögen und das Schweißbad herum zuzuführen, und wobei der Schweißbrenner **dadurch gekennzeichnet ist, dass** er auch Mittel (190; 290; 390) aufweist, um die Beziehung zwischen den von zwei oder mehr Kontaktdüsen vorspringenden Längen der Elektroden einzustellen, die vom Schweißbrenner zugeführt werden können, wobei diese Mittel zur Einstellung der vorspringenden Elektrodenlänge für die Einstellung zugänglich sind, wenn der Brenner zum Schweißen bestückt und verbunden ist.

2. Schweißbrenner nach Anspruch 1, **dadurch gekennzeichnet, dass** er auch Mittel (192; 392) aufweist, um den Abstand zwischen den Punkten einzustellen, an welchen zwei verschiedene Lichtbögen auf das Schweißbad auftreffen, wobei diese Lichtbögen während des Schweißens jeweils zwischen ihrem eigenen Schweißelektrodenende und einem gemeinsamen Schweißbad brennen und diese Abstandseinstellmittel für die Einstellung sind, wenn der Brenner zum Schweißen bestückt und verbunden ist.

3. Schweißbrenner nach Anspruch 1 oder 2, **dadurch gekennzeichnet, dass** die Mittel zur Einstellung der vorspringenden Elektrodenlänge und/oder die Abstandseinstellmittel einen Getriebemechanismus aufweisen, um die Einstellgenauigkeit zu verbessern.

4. Schweißbrenner nach einem der vorherigen Ansprüche, **dadurch gekennzeichnet, dass** die Mittel zur Einstellung der vorspringenden Länge und/oder die Abstandseinstellmittel einen Elektromotor zum Durchführen der Einstellung oder eine Vorrichtung zum Anschluss solch eines Motors aufweisen.

5. Schweißbrenner nach einem der vorherigen Ansprüche, **dadurch gekennzeichnet, dass** die Mittel zur Einstellung der vorspringenden Elektrodenlänge die gegenseitige Position der ersten und zweiten Schweißdrahtführung im Wesentlichen entlang der Längssymmetrieachse (405) des Schweißbrenners beeinflussen.

6. Schweißbrenner nach einem der vorherigen Ansprüche, **dadurch gekennzeichnet, dass** die Mittel zur Einstellung der vorspringenden Länge ein Gewindeelement (191) aufweisen, das zwischen dem Schweißbrennerkörper (101) oder der zweiten Schweißdrahtführung zum einen und der ersten Schweißdrahtführung zum anderen arlgeordnet ist, so dass die Drehung dieses Elements die relative Bewegung zwischen den Teilen bewirkt, die durch dieses Gewindeelement verbunden sind.

7. Schweißbrenner nach Anspruch 6, **dadurch gekennzeichnet, dass** die Ganghöhe und/oder die Richtung des Gewindes für dieses Gewindeelement unterschiedlich ist, je nachdem, ob die Verbindung mit dem Schweißbrennerkörper/der zweiten Schweißdrahtführung zum einen und die Verbindung mit der ersten Schweißdrahtführung zum anderen betroffen ist.

8. Schweißbrenner nach Anspruch 6 oder 7, **dadurch gekennzeichnet, dass** das Gewindeelement einen Schraubenschlüsselgriff oder ein Übertragungselement wie z. B. ein Schneckenrad, ein Zahnrad, einen Radkranz oder eine Riemenscheibe zum Drehen des Gewindeelements aufweist.

9. Schweißbrenner nach einem der Ansprüche 1 bis einschließlich 5, **dadurch gekennzeichnet, dass** die Mittel zur Einstellung der vorspringenden Elektrodenlänge ein lineares Übertragungselement (393) wie z. B. eine Zahnstange und einen Ritzel aufweisen, das so auf die erste Schweißdrahtführung wirkt, dass die relative Bewegung zwischen der Letzteren und der zweiten Schweißdrahtführung erreicht wird.

10. Schweißbrenner nach einem der vorherigen Ansprüche, **dadurch gekennzeichnet, dass** die Verbindung zwischen einer Schweißdrahtführung und der zugehörigen Kontaktdüse auf solche Weise konzipiert ist, dass diese Kontaktdüse, wenn sie verbunden worden ist, in Bezug auf die Längssymmetrieachse (204) der zugehörigen Schweißdrahtführung einen Winkel bildet, und **dadurch, dass** die Mittel zur Einstellung des Abstands zwischen den Punkten, an welchen zwei verschiedene Lichtbögen auf das Schweißbad auftreffen, ausgelegt sind, um diese Schweißdrahtführung um ihre Längssymmetrieachse herum zu drehen.

11. Schweißbrenner nach einem der vorherigen Ansprüche, **dadurch gekennzeichnet, dass** er auch eine Drehvorrichtung (253; 453) aufweist, um den ganzen Schweißbrenner um seine Längssymmetrieachse (405) herum zu drehen, um die Position der Lichtbögen relativ zur Mittellinie der Schweißstelle am geschweißten Gegenstand einzustellen, wobei diese Drehvorrichtung zur Drehung zugänglich ist, wenn der Brenner zum Schweißen bestückt und verbunden ist.

12. Anlage, umfassend einen Manipulator wie z. B. einen Industrieroboter, der geeignet ist, einen Schweißbrenner zur Bewegung entlang eines geschweißten Gegenstands zu tragen, oder der geeignet ist, einen geschweißten Gegenstand zur Bewegung entlang eines Schweißbrenners zu tragen, wobei der Manipulator ein Steuerungssystem aufweist, um die programmierte relative Bewegung zwischen dem Schweißbrenner und den Schweißstellen des geschweißten Gegenstands zu steuern, **dadurch gekennzeichnet, dass** der Schweißbrenner in beiden Fällen einem der vorherigen Ansprüche entsprechend konstruiert ist, und **dadurch**, **dass** das Steuerungssystem auch ein erstes Steuergerät aufweist, das geeignet ist, die Beziehung zwischen der von verschiedenen Kontaktdüsen vorspringenden Elektrodenlänge während des Schweißens einzustellen und/oder ein zweites Steuergerät, das geeignet ist, den Abstand zwischen den Punkten einzustellen, an welchen zwei verschiedene Lichtbögen auf das Schweißbad auftreffen.

13. Anlage nach Anspruch 12, **dadurch gekennzeichnet, dass** das Steuerungssystem Mittel aufweist, um die gegenseitigen Positionen der Schweißdrahtführungen an jedem programmierten Bewegungspunkt des Schweißbrenners und/oder des geschweißten Gegenstands zu speichern.

14. Anlage nach Anspruch 13, **dadurch gekennzeichnet, dass** das Steuerungssystem Mittel aufweist, um das erste und/oder zweite Steuergerät so zu steuern, dass zwischen den verschiedenen Positionen, die Anspruch 13 gemäß gespeichert wurden, ein fließender Übergang erreicht wird.

## Revendications

1. Chalumeau soudeur (100; 200; 300; 400) pour un soudage MIG/MAG avec un certain nombre d'électrodes de soudage dans le même bain de fusion, comprenant un premier (110; 210; 310; 410) et un deuxième (115; 215; 315; 415) tubes de contact, lesdits tubes étant électriquement isolés l'uns de l'autre, dans lequel chaque tube de contact comprend un premier dispositif de connexion (120, 125) pour établir une connexion électrique avec une ligne d'alimentation à connecter (165, 170) pour obtenir un courant de soudage, et aussi un deuxième dispositif de connexion (130, 135) pour établir une connexion avec un guide de fil à connecter (175, 180) pour alimenter l'électrode de soudage (160) à partir d'un mécanisme d'alimentation de fil, et dans lequel chaque tube de contact comprend également des moyens (140, 145) de connexion à une buse de contact, buse de contact (150, 155) dans laquelle, pendant le soudage, le transfert principal du courant de soudage à l'électrode de soudage (160) qui peut être conduit à travers le chalumeau soudeur se produit, et dans lequel ledit chalumeau soudeur comprend également des moyens (195) de connexion à une couverture de gaz (185) dont la fonction consiste à fournir un gaz de protection autour des arcs et du bain de fusion pendant le soudage, et dans lequel le chalumeau soudeur est **caractérisé en ce qu'**il comprend également des moyens (190; 290; 390) pour régler la relation entre les longueurs de projection à partir de deux buses de contact, ou plus, des électrodes qui peuvent être conduites à travers le chalumeau soudeur, dans lequel ledit/lesdits moyen(s) de réglage de projection est/sont accessible(s) pour être réglés lorsque le chalumeau est équipé et connecté pour procéder à une opération de soudage.

2. Chalumeau soudeur selon la revendication 1, **caractérisé en ce qu'**il comprend également des moyens (192; 392) pour régler l'espacement entre les points auxquels deux arcs différents rencontrent le bain de fusion, dans lequel ces arcs, pendant le soudage, brûlent chacun entre leur propre extrémité d'électrode de soudage et un bain de fusion commun sur l'objet soudé, et dans lequel ledit/lesdits moyens de réglage d'espacement est/sont accessible(s) pour être réglés lorsque le chalumeau est équipé et connecté pour procéder à une opération de soudage.

3. Chalumeau soudeur selon la revendication 1 ou 2, **caractérisé en ce que** les moyens de réglage de projection et/ou les moyens de réglage d'espacement comprennent un mécanisme d'engrenage destiné à améliorer la précision du réglage.

4. Chalumeau soudeur selon l'une quelconque des revendications précédentes, **caractérisé en ce que** les moyens de réglage de projection et/ou les moyens de réglage d'espacement comprennent un moteur électrique pour procéder au réglage ou un dispositif à connecter à un moteur de ce type.

5. Chalumeau soudeur selon l'une quelconque des revendications précédentes, **caractérisé en ce que** les moyens de réglage de projection influencent la position mutuelle des premier et deuxième tubes de contact essentiellement le long de l'axe de symétrie longitudinal (405) du chalumeau soudeur.

6. Chalumeau soudeur selon l'une quelconque des revendications précédentes, **caractérisé en ce que** les moyens de réglage de projection comprennent un élément fileté (191) disposé entre, d'une part, le corps de chalumeau soudeur (101) ou le deuxième tube de contact et, d'autre part, le premier tube de contact, de telle sorte que la rotation dudit élément entraîne un déplacement relatif entre les parties connectées par l'intermédiaire de l'élément fileté.

7. Chalumeau soudeur selon la revendication 6, **caractérisé en ce que**, pour ledit élément fileté, le pas et/ou la direction du filet diffère en ce qui concerne, d'une part, la connexion au corps de chalumeau soudeur/deuxième tube de contact et, d'autre part, la connexion au premier tube de contact.

8. Chalumeau soudeur selon la revendication 6 ou 7, **caractérisé en ce que** l'élément fileté comprend une prise de clé ou un élément de transmission tel qu'une roue à vis sans fin, une roue dentée, un engrenage à jante ou une poulie pour la rotation dudit élément fileté.

9. Chalumeau soudeur selon l'une quelconque des revendications 1 à 5 incluse, **caractérisé en ce que** les moyens de réglage de protection comprennent un élément de transmission linéaire (393) tel qu'une crémaillère et un pignon agissant sur le premier tube de contact de telle sorte qu'il se produise un déplacement relatif entre ce dernier et le deuxième tube de contact.

10. Chalumeau soudeur selon l'une quelconque des revendications précédentes, **caractérisé en ce que** la connexion entre un tube de contact et la buse de contact associée est réalisée de telle sorte que cette buse de contact, lorsqu'elle a été connectée, forme un angle par rapport à l'axe de symétrie longitudinal (204) du tube de contact associé, et **en ce que** le(s) moyen(s) de réglage de l'espacement entre les points auxquels deux arcs différents rencontrent le bain de fusion est/sont conçus de manière à faire tourner ce tube de contact autour de son axe de symétrie longitudinal.

11. Chalumeau soudeur selon l'une quelconque des revendications précédentes, **caractérisé en ce qu'**il comprend également un dispositif de rotation (253, 453) pour faire tourner l'ensemble du chalumeau soudeur autour de son axe de symétrie longitudinal (405) pour régler les positions des arcs par rapport à l'axe médian du joint sur l'objet à souder, dans lequel ce dispositif de rotation est accessible pour tourner lorsque le chalumeau est équipé et connecté pour procéder à une opération de soudage.

12. Installation, comprenant un manipulateur, tel qu'un robot industriel, adapté pour porter un chalumeau soudeur pour déplacer celui-ci le long d'un objet à souder, ou adapté pour porter un objet à souder pour déplacer celui-ci le long d'un chalumeau soudeur, dans lequel le manipulateur comprend un système de commande pour commander un déplacement relatif programmé entre le chalumeau soudeur et les joints de l'objet à souder, **caractérisée en ce que** le chalumeau soudeur est dans les deux cas conçu selon l'une quelconque des revendications précédentes, et **en ce que** le système de commande comprend également un premier dispositif de commande adapté pour régler les relations entre la longueur des projections d'électrode à partir des différentes buses de contact pendant le soudage, et/ou un deuxième dispositif de commande adapté pour régler l'espacement entre les points auxquels différents arcs rencontrent le bain de fusion pendant le soudage.

13. Installation selon la revendication 12, **caractérisée en ce que** le système de commande comprend des moyens pour stocker les positions mutuelles des tubes de contact à chaque point de déplacement programmé du chalumeau soudeur et/ou de l'objet à souder.

14. Installation selon la revendication 13, **caractérisée en ce que** le système de commande comprend des moyens pour commander le premier et/ou le deuxième dispositif de commande de telle sorte qu'une transition régulière soit réalisée entre les différentes positions stockées selon la revendication 13.
